# EUROPEAN PATENT APPLICATION

(11) **EP 2 418 188 A1**
(43) Date of publication of application: **15.02.2012**
(21) Application number: 10761213.7
(22) Date of filing: 31.03.2010
(51) Int. Cl.: C04B 28/36

(54) **CEMENT MORTAR BODY**

(30) Priority: 06.04.2009 ES 200900933
(71) Applicant: Fradera Pellicer, Carlos, L'Aldosa La Massana (AD)
(72) Inventor: Fradera Pellicer, Carlos, L'Aldosa La Massana (AD)
(74) Representative: Curell Suñol, Marcelino
(86) International application number: PCT/ES2010/000135
(87) International publication number: WO 2010/116009

(57) **Abstract**

This cement mortar body (2) that is constituted by an aggregate (4) having a silica content of around 99.5% that is formed by particles of rounded surface and a particle size between 0.1 and 1 mm. The body has the existing interstices occupied by an ettringite binder (6), derived from the hydration of cement particles (5) of a particle size of around the 5 microns, and by the perfectly hydrated cement particles (5) themselves. The body (2) may incorporate in the interstices formed between the aggregate particles (4), the ettringite binder (6) and the cement particles (5), microparticles (7) and colloidal materials. Nanoparticles (8) may be incorporated in the interstices formed between the aggregate particles (4), the cement particles (5) with ettringite binder (6), the microparticles (7) and the colloidal materials. The invention also relates to a method for the manufacture of said mortar body.

## Description

### Object of the invention

The present invention relates to a cement mortar body and to a method for the manufacture of a cement mortar body that is moulded with a cement mortar specially for forming bodies with or without metallic reinforcement that displays properties of impermeability and hardness appropriate for specific uses.

### Background of the invention

There is no knowledge of patent applications that have as object of the invention the attainment of a mortar of absolute impermeability and extreme hardness such as obtained with the object of the present invention.

However, there are patent applications the object of which is to obtain dense mortars, but that do not have the abovementioned hardness and impermeability features.

Thus, patents ES 2 257 682 and ES 2 299 899 have as their object mortars with qualities that do not affect those of the present invention, circumstances that will be made obvious hereinafter.

### Summary of the invention

The object of the invention is a cement mortar body that, being moulded with a silica mortar and cement with a compact, nonporous texture, is specially for forming bodies that, with or without metallic reinforcement, display properties of impermeability, compressive strength and hardness appropriate for specific uses, which, in turn, leads to the body having an extraordinary electrical insulating capacity.

According to the invention, the cement mortar body is constituted by an aggregate having a silica content of around 99.5% that is formed by rounded surface particles with a particle size of between 0.1 and 1 mm, the interstices existing in the grouping of the particles themselves being occupied by an ettringite binder derived from the hydration of cement particles of a particle size of around 5 microns and by the perfectly hydrated cement particles themselves.

A feature of the invention is that the body, being constituted by an aggregate having a silica content of around 99.5%, that is formed by rounded surface particles with a particle size of between 0.1 and 1 mm, has the interstices existing in the grouping of the particles themselves which are occupied by an ettringite binder derived from the hydration of some cement particles of particle size of around 5 microns and by the hydrated cement particles themselves, said body may incorporate, in the possible interstices formed between the aggregate particles, the ettringite binder and the cement particles, microparticles of around one micron and colloidal materials, and, finally, nanoparticles in the interstices formed between said aggregate particles, the cement particles with the ettringite binder, said microparticles (7) said and colloidal materials.

A further feature of the invention is that the body, during the setting process, displays compressive strength values indicated hereinafter: around 350 kg/cm2 at 8 hours; around 500 kg/cm2 at 24 hours; around 575 kg/cm2 at 48 hours; around 750 kg/cm2 at 7 days and around 1,000 kg/cm2 at 28 days.

A further feature of the invention is the fact that the cement mortar body is 100% impermeable and, consequently therewith has an extraordinary electrical insulating capacity.

The object of the invention also contemplates a method for the manufacture of the cement mortar body of the invention. In accordance therewith, a weight of aggregate having a rounded surface and a particle size of between 0.1 and 1 mm, and a silica content of 99.5%, is dry mixed with a weight of cement particles having a particle size of around 5 microns comprised between 27% and 37% of the weight of the total dry mass, to which, without interrupting the mixing operation, there is added a weight of water corresponding to an amount of between 29% and 32% of the weight of cement until a totally homogenous mass is obtained, with perfect hydration of the cement, said mass being poured into a mould and held in said mould for setting thereof with the surface of the mass in contact with a cover that determines the encapsulation of the mould, reduces the evaporation of the water and calibrates one of the dimensions of the body to be obtained.

A further feature of the method of the invention is that the dry mixing of the solid components of the mortar, in a first stage, and of the components with the addition of water, in a second stage immediately following the first one, is carried out by mixing the components in a mixing point static in space and sequentially, without interrupting the mixing process, on the circulating heterogeneous mixture of the components moving in a closed path that inescapably passes through the static mixing point (R) until a homogenous mixture and the perfect hydration of the cement particles is obtained.

Yet a further feature of the method of the invention is that the perfect hydration of the cement gives rise to the formation of a binder for the aggregate which, known as ettringite, is chemically constituted by tricalcium sulfoaluminate of formula Ca₄S0₄(Al0₃)2 30-32 H₂O.

A further feature of the method of the invention is that the setting of the encapsulated mortar in said forming mould is carried out by a supply of heat of the group comprising exogenous heating, such as by hot air in means of the group comprising furnaces and tunnels, and endogenous heating by high frequency, either taken separately or in the technically possible combinations thereof, the setting of the material being carried out in conditions of a temperature of between 25º and 35ºC and humidity of around 94%.

A further feature of the method of the invention is that it is optionally possible to incorporate in the possible interstices formed between the aggregate particles, the ettringite binder and the cement particles, microparticle of around one micron and colloidal materials, and, in the interstices formed between said aggregate particles, said cement particles with said ettringite binder and said microparticles and said colloidal materials, nanoparticles and, finally, in the interstices formed between said particles of aggregate and cement with the ettringite binder and said microparticles and colloidal materials, nanoparticles.

According to the foregoing feature, part of the nanoparticles to be used in the process are nanoparticles having tribological properties which when located in the mould and/or the encapsulation and calibrating covers, exert their action in the physical operation of moulding and demoulding, whereas another part of the nanoparticles consists of nanoparticles acting in the physico-chemical development of the setting of the mortar, providing the finished product with multiple properties determined by the type of nanoparticles used.

Finally, further features of the invention, related to the mixing and homogenization of the components of the mortar of the invention, are that the dry mixing of the solid mortar components, in a first stage, and of these with the addition of water, in a second stage immediately following the first one, is carried out with high frequency vibration and/or high vacuum, made by means of means of the group comprising mechanical, electrical, electronic, electromagnetic and fluidic means, taken separately or in the technically possible combinations thereof.

### Brief Description of the Drawings

To facilitate the understanding of the foregoing ideas, at the same time as various details of a constructional nature are disclosed, there is described hereinbelow an embodiment of the present invention, with reference to the drawings accompanying this specification, which in view of their primordially illustrative nature, these must be understood to be lacking in any limiting scope relative to the breadth of the legal protection applied for. In the drawings:
Figure 1 is a perspective view of a portion of a cement mortar panel made according to the invention.
Figure 2 is a schematic microscopic diagram of a micro-fraction of a cement mortar body from a panel such as the one appearing in the previous figure.
Figure 3 is a schematic view of a mixing arrangement that operates according to the content of claim 6.
Figure 4 is a schematic view of the directions of circulation of the mass in the mixing and transfer zones thereof.
Figure 5 is a graph of the strength of the material forming the cement mortar body object of the invention depending on the setting time.
Figure 6 is a graph of the aggregate particle sizes according to C. Fuller and C. Bolomey curves.

### Description of Embodiments of the Invention

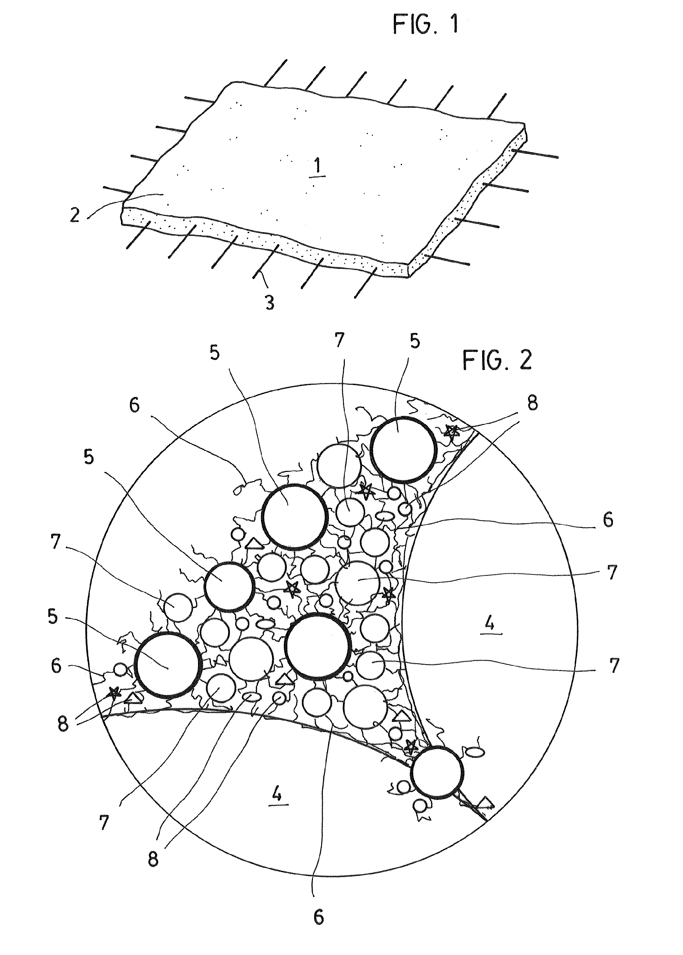

Hereinafter there is given the description of possible embodiments of the cement mortar body of the invention, together with the industrial process for obtaining them, which process is also the object of the invention. Figure 1 shows one of the possible configurations of the cement mortar of the present invention. The cement mortar consists of a fragment of a prefabricated panel 1 for building comprising a cement mortar body 2 that is biaxially reinforced with prestressed elements 3 and having a thickness of three centimeters.

Figure 2 is a microscopic diagram of a microfraction of a cement mortar body 2 from a prefabricated panel 1 for building in which it is seen to be formed by the components that are schematically shown. The components consist of an aggregate 4 having a silica SiO₂ content of 99.5%, a cement particle 5, ettringite crystals 6, microparticles 7 and nanoparticles 8 of different classes arbitrarily shown, for illustrative purposes, by non-referenced stars, circles, ovals and triangles.

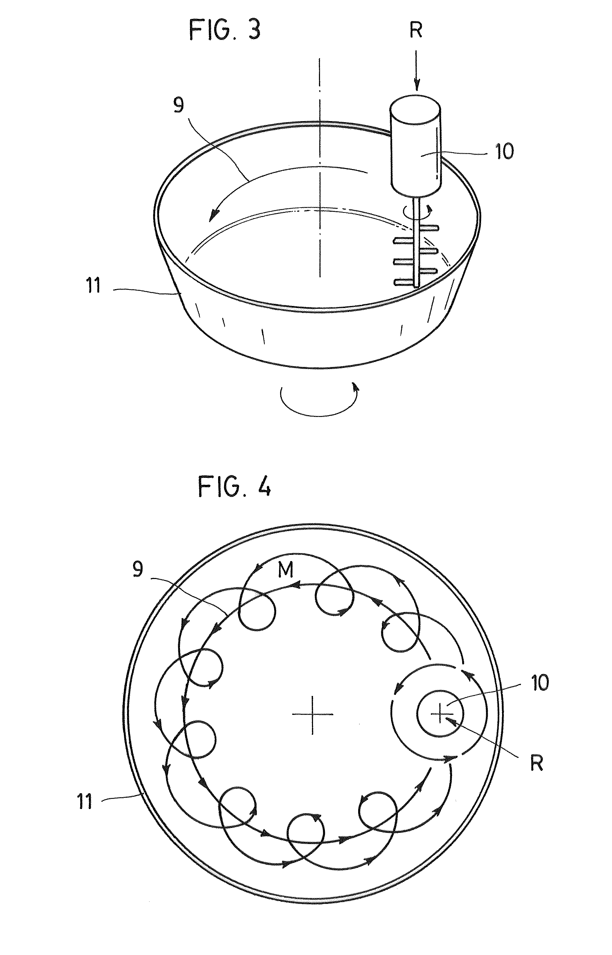

Figure 3 schematically shows the fundamental constitution of a mixing machine which will allow the cement mortar with which the body 2 of the invention is made, to be obtained. Figure 4 shows the closed path 9 of circulation of the mixture, both in a static mixing point R, and in the transfer thereof after each mixing operation developed according to said closed circulation path 9.

The dry mixing of the solid components of the mortar mentioned in the description of Figure 2, in a first stage, and thereof with the addition of water, in a second stage immediately following the first one, is carried out by mixing the components at the mixing point R static in space and sequentially, without interruption of the mixing process, on the circulating heterogeneous mixture M of the components moving in a closed path that inescapably passes through the static mixing point until a homogenous mixture and perfect hydration of the cement particles is obtained. The mixing point R has been materialized by the vertically inserted stirrer 10 eccentrically located in a revolving drum 11 of inverted truncated cone configuration.

With the preceding kneading and mixing system, high values of mechanical strength and impermeability are obtained, which are sustained basically in the formulation (particle size of the aggregate/cement combination, the low water/cement ratio in the mortar (0.30) and the use of high water reducing additives and superplastifiers). During the kneading process, the cement and the aggregate contact the mixing water and a silica-rich gel forms that absorbs most of the available water.

Then, the gel agglomerates between the non-hydrated cement particles, coating said particles in the process. The calcium hydroxide reacts with the outer surface of this gel to form hydrated calcium silicate. This gel forms in the empty spaces in the hydrated calcium silicate produced by the hydration of the cement particles, producing a very dense structure, since it fills the interstitial spaces remaining between the cement particles (with a particle size of approximately 30% under five microns) and the cement in turn fills up the interstitial spaces in the aggregate, all of which confers the physical properties of strength, impermeability and electrical insulation to the end product.

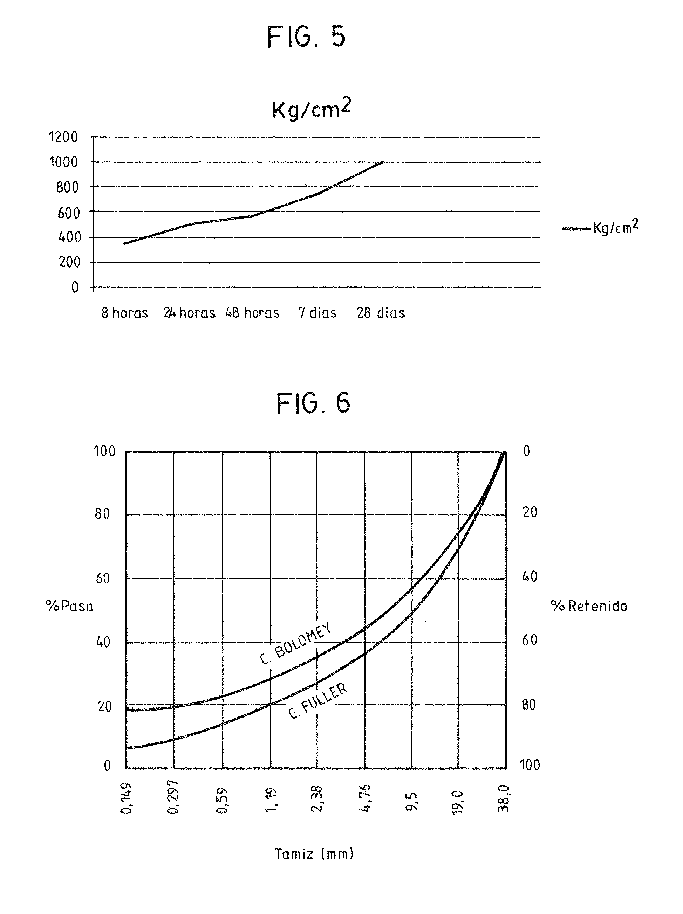

Figure 5 is the graph of the strength of the material constituting the cement mortar body 2 of the invention depending on the setting time, which corresponds to the content of claim 3. The graph shows that the compressive strength of the mortar is of the values indicated hereinafter: around 350 kg/cm2 at 8 hours; around 500 kg/cm2 at 24 hours; around 575 kg/cm2 at 48 hours; around 750 kg/cm2 at 7 days and around 1,000 kg/cm2 at 28 days.

Figure 6 is a particle size graph of the aggregates 4 according to the C. Fuller and C. Bolomey curves of that has been followed for obtaining of cement mortar body 2 of the invention.

This cement mortar body 2, fundamentally, is constituted by an aggregate 4 having a silica content of around 99.5% that is formed by rounded surface particles with a particle size of between 0.1 and 1 mm. The interstices existing in the grouping of the aggregate particles are occupied by an ettringite binder 6 derived from the hydration of cement particles 5 of a particle size of around 5 microns and by the perfectly hydrated cement particles 5 themselves.

However, said cement mortar body 2 may include an indeterminate number of additives for correctly adapting the special features of the body 2 to the requirements of use thereof. According to this premise, the following process has been developed: being constituted, as in the foregoing case, by an aggregate 4 having a silica content of around 99.5% that is formed by rounded surface particles with a particle size of between 0.1 and 1 mm, has the interstices existing in the grouping of the particles themselves occupied by an ettringite binder 6 derived from the hydration of cement particles 5 of a particle size of around 5 microns and by the perfectly hydrated cement particles 5 themselves, said body 2 may incorporate in the possible interstices formed between the aggregate particles 4, the ettringite binder 6 and the cement particles 5,
[a] microparticles 7 of around one micron, colloidal materials, not shown, and, finally, in the interstices formed between the aggregate particles 4, the cement particles 5 with the ettringite binder 6 and said microparticles 7 and colloidal materials,
[b] nanoparticles 8.

The cement mortar body 2, specially the one comprised in claim 1 and obtained according to the process of claim 5, has an impermeability of 100% in tests made according to the UNE EN 1015 -18 and 1170 - 6 Standards by LGAI Technological Center, S. A. of the Campus of the UAB (Universidad Autonoma de Barcelona) and the Recommendation II 4 RILEM by the Universidad Politecnica de Catalunya. Consequently, with such impermeability results, an extraordinary electrical insulation capacity may be attributed to said cement mortar body 2.

The perfect hydration of the cement particles 5 gives rise to the formation of a binder for the aggregate which, known as ettringite 6, is constituted chemically by tricalcium sulfoaluminate of formula Ca₄S0₄(Al0₃)₂ 30-32 H_{2O}.

The setting of the cement mortar in the forming mould is made in conditions of encapsulation that are described hereinbelow: a temperature of between 25^{º} and 35ºC and a humidity of around 94%, which is carried out by a supply of heat of the group comprising exogenous heating, such as by hot air in means of the group comprising furnaces and tunnels, and endogenous heating by high frequency, taken separately or in the technically possible combinations thereof.

The encapsulation process consists of closing of the mould once the mortar has been poured and distributed therein, in such a way that two actions take place in the same process: the first one consists of placing the plugs or sockets that are going to serve for fixing the cement mortar panel or body to the structure of the building by means of the corresponding anchorage, whereas second one consists of closing or encapsulating the mass of mortar deposited in the mould so that during the setting process the mass conserves sufficient humidity to avoid fissures and to obtain optimal properties when stripping the cement mortar body from the mould.

As has been suggested, optionally, in the possible interstices formed between the aggregate particles 4, the ettringite binder 6 and the cement particles 5, microparticles 7 of around one micron and colloidal materials can be incorporated. Nanoparticles 8 can be incorporated in the interstices formed between the aggregate particles 4, the cement particles 5 with the ettringite binder 6 and said microparticles 7 and colloidal materials. Finally, nanoparticles 8 may be incorporated in the interstices formed between the particles of aggregate 4 and cement 5 with the ettringite binder 6 and said microparticles 7 and colloidal materials.

Part of the nanoparticles 8 to be used in the process are nanoparticles having tribological properties that, located in the mould and/or the encapsulating and calibrating covers, exert their action in the physical operation of the moulding and the demoulding, whereas another part of said nanoparticles consists of nanoparticles acting in the physico-chemical development of the setting of the mortar, providing the finished product with multiple properties determined by the type of nanoparticles used.

The dry mixing of the solid cement mortar components, in a first stage, and of these with the addition of water, in a second stage immediately following the first one, is carried out with high frequency vibration, made by means of the group comprising mechanical, electrical, electronic, electromagnetic and fluidic means, taken separately or in the technically possible combinations thereof.

The dry mixing of the solid cement mortar components, in a first stage, and of these with the addition of water, in a second stage immediately following the first one, is carried out with high vacuum, made by means of the group comprising mechanical, electrical, electronic, electromagnetic and fluidic means, taken separately or in the technically possible combinations thereof.

## Claims

1. A cement mortar body, **characterized in that** it is constituted by an aggregate (4) having a silica content of around 99.5% that is formed by rounded surface particles with a particle size of between 0.1 and 1 mm, the interstices existing in the grouping of the particles themselves being occupied by an ettringite binder (6) derived from the hydration of cement particles (5) of a particle size of around 5 microns and by the perfectly hydrated cement particles (5) themselves.

2. The cement mortar body of the previous claim, **characterized in that** said body may incorporate in the possible interstices formed between said aggregate particles (4), said ettringite binder (6) and said cement particles (5), microparticles (7) of around one micron and colloidal materials, and, finally, nanoparticles (8) in the interstices formed between said aggregate particles (4), said cement particles (5) with said ettringite binder (6), said microparticles (7) said and colloidal materials.

3. The cement mortar body of claim 1, **characterized in that** the compressive strength of the mortar has the values indicated hereinafter: around 350 kg/cm2 at 8 hours; around 500 kg/cm2 at 24 hours; around 575 kg/cm2 at 48 hours; around 750 kg/cm2 at 7 days and around 1,000 kg/cm2 at 28 days.

4. The cement mortar body of claim 1, **characterized in that** it is 100% impermeable and, consequently therewith has an extraordinary electrical insulating capacity.

5. A method for the manufacture of a cement mortar body, **characterized in that**: [a] a weight of aggregate (4) having a rounded surface and a particle size of between 0.1 and 1 mm, and a silica content of 99.5%, is dry mixed with [b] a weight of cement particles (5) having a particle size of around 5 microns comprised between 27% and 37% of the weight of the total dry mass, to which, [c] without interrupting the mixing operation, there is added a weight of water corresponding to an amount of between 29% and 32% of the weight of cement until a totally homogenous mass is obtained, with perfect hydration of the cement, [d] said mass being poured into a mould and held in said mould for setting thereof with the surface of said mass in contact with a cover that determines the encapsulation of the mould, reduces the evaporation of the water and calibrates one of the dimensions of the body to be obtained.

6. The method for the manufacture of a cement mortar body of previous claim, **characterized in that** the dry mixing of the solid components of the mortar, in a first stage, and of said components with the addition of water, in a second stage immediately following the first one, is carried out by mixing the components in a mixing point (R) static in space and sequentially, without interrupting said mixing process, on the circulating heterogeneous mixture of said components moving in a closed path that inescapably passes through the static mixing point (R) until a homogenous mixture and the perfect hydration of said cement particles (5) is obtained.

7. The method for the manufacture of a cement mortar body of claim 5, **characterized in that** said perfect hydration of the cement gives rise to the formation of a binder for the aggregate (4) that, known as ettringite (6), is constituted chemically by tricalcium sulfoaluminate of formula Ca₄SO₄(AI0₃)₂ 30-32 H₂O.

8. The method for the manufacture of a cement mortar body of claim 5, **characterized in that** the setting of the encapsulated mortar in said forming mould is carried out by a supply of heat of the group comprising exogenous heating, such as by hot air in means of the group comprising furnaces and tunnels, and endogenous heating by high frequency, either taken separately or in the technically possible combinations thereof.

9. The method for the manufacture of a cement mortar body of claim 5, **characterized in that** the setting of the material is carried out in conditions of a temperature of between 25º and 35ºC and humidity of around 94%.

10. The method for the manufacture of a cement mortar body of claim 5, **characterized in that** it is optionally possible to incorporate in the possible interstices formed between the aggregate particles (4), the ettringite binder (6) and the cement particles (5), microparticles (7) of around one micron and colloidal materials, and, in the interstices formed between said aggregate particles (4), said cement particles (5) with said ettringite binder (6) and said microparticles (7) and said colloidal materials, nanoparticles (8) and, finally, in the interstices formed between said particles of aggregate (4) and cement (5) with the ettringite binder (6) and said microparticles (7) and colloidal materials, nanoparticles (8).

11. The method for the manufacture of a cement mortar body of claim 10, **characterized in that** part of said nanoparticles (8) to be used in the process are nanoparticles having tribological properties which when located in the mould and/or the encapsulation and calibrating covers, exert their action in the physical operation of moulding and demoulding, whereas another part of said nanoparticles (8) consists of nanoparticles acting in the physico-chemical development of the setting of the mortar, providing the finished product with multiple properties determined by the type of nanoparticles (8) used.

12. The method for the manufacture of a cement mortar body of claim 6, **characterized in that** the dry mixing of the solid mortar components, in a first stage, and of these with the addition of water, in a second stage immediately following said first stage, is carried out with high frequency vibration, made by means of means of the group comprising mechanical, electrical, electronic, electromagnetic and fluidic means, taken separately or in the technically possible combinations thereof.

13. The method for the manufacture of a cement mortar body of claim 6, **characterized in that** the dry mixing of the solid mortar components, in a first stage, and of these with the addition of water, in a second stage immediately following said first stage, is carried out with a high vacuum, made by means of means of the group comprising mechanical, electrical, electronic, electromagnetic and fluidic means, taken separately or in the technically possible combinations thereof.
